# EUROPÄISCHE PATENTANMELDUNG

(11) **EP 0 899 851 A1**
(43) Veröffentlichungstag der Anmeldung: **03.03.1999**
(21) Anmeldenummer: 98810580.5
(22) Anmeldetag: 24.06.1998
(51) Int. Cl.: H02K 3/38

(54) **Gasgekühlte elektrische Maschine**

(30) Priorität: 23.08.1997 DE 19736784
(71) Anmelder: Asea Brown Boveri AG, 5401 Baden (CH)
(72) Erfinder: Eichin, Hermann, 79771 Klettgau (DE); Neidhöfer, Gerhard Prof. Dr., 5212 Hausen b. Brugg (CH); Schuler, Roland, 5430 Wettingen (CH)
(74) Vertreter: Hetzer, Hans Jürgen

(57) **Zusammenfassung**

Bei einer Lötösenisolierung für eine aus Wicklungsstäben (12, 13) aufgebauten Statorwicklung einer elektrischen Maschine, deren Stabenden in einem Wickelkopf (19) Lötösen (14a, b, c) aufweisen, werden die voneinander und gegenüber geerdeten Gehäuseteilen zu isolierenden Lötösen (14a,b,c) im wesentlichen an ihrer ersten Lötösenseitenfläche (20a) mit einer Halbkachel (16) bedeckt, wobei die erste Lötösenseitenfläche (20a) einer ersten Lötöse (14b) einer zweiten benachbarten Lötöse (14a) zugewandt ist, und wobei eine zweite Lötösenseitenfläche (20b) der ersten Lötöse (14b), welche zweite Lötösenseitenfläche (20b) einer dritten Lötöse (14c) benachbart ist, frei bleibt.

## Beschreibung

### TECHNISCHES GEBIET

Die Erfindung bezieht sich auf das Gebiet der gasgekühlten elektrischen Maschinen mit einer Statorwicklung, deren Stabenden im Wickelkopf weiterverbindende Lötösen aufweisen. Bei der Erfindung wird ausgegangen von einer gasgekühlten elektrischen Maschine nach dem Oberbegriff von Patentanspruch 1.

Lötösen an Stabenden genannter Art sind beispielsweise in dem Buch H. SEQUENZ, ,,Herstellung der Wicklungen elektrischer Maschinen", Springer-Verlag Wien, New York, 1973, Seiten 164-166, beschrieben.

### TECHNOLOGISCHER HINTERGRUND UND STAND DER TECHNIK

Bei elektrischen Maschinen mit indirekt gekühlter Statorwicklung reichte bislang zur Kühlung der Stirnbügel im Wickelkopf und insbesondere der Ösen, welche die einzelnen Leiterstäbe elektrisch und mechanisch zu eigentlichen Wicklungssträngen verbinden, der Gasstrom aus, welcher durch den Wickelkopf durchtritt. Bei Grenzleistungsmaschinen aber können die Wickelköpfe und Ösen durch zu hohe Erwärmung gefährdet werden. Während der in den Wicklungsnuten eingebettete Teil der Wicklung gezielt gekühlt wird, erwärmen sich diese frei liegenden Wicklungsteile und auch deren Ösen nicht nur durch den Stromfluss, sondern auch durch die elektromagnetischen Felder im Wickelkopfraum. Besonders gefährdet ist dabei die Isolierung im Bereich der Ösen und - sofern die Ösen nicht hartgelötet sind - die gesamte Konstruktion der Ösen Weiterverbindungen. Die Isolierung der Lötösen an den Stabenden einer Hochspannungswicklung bei elektrischen Maschinen erfolgt normalerweise mittels einer die gesamte Lötöse umschliessenden Kappe - auch Kachel genannt - aus elektrischem Isoliermaterial, die über jeder Lötöse angebracht wird. Diese Kacheln werden meist noch mit härtendem Kunststoff ausgefüllt, z.B. ausgeschäumt oder ausgegossen. Kacheln und Ausfüllmasse haben zur Aufgabe, alle Stabenden der Wicklung gegeneinander und gegenüber geerdeten Gehäuseteilen elektrisch zu isolieren.

In der EP 0 713 281 ist beispielhaft eine Lötösenisolierung offenbart, wobei die Kacheln hier aus geschrumpften und mit Isolierharz getränkten Gewebematten aufgebaut sind. Nach der Fertigung der Lötösenisolierungen werden alle Lötösen von den Kacheln zwecks Isolation gegenüber benachbarten Lötösen und gegenüber Gehäuseteilen umgeben. Weitere ähnlich aufgebaute Lötösenisolierungen sind in dem Buch von H. Sequenz, ,,Herstellung der Wicklungen elektrischer Maschinen, Springer-Verlag Wien, New York, 1973, Seiten 164-166, beschrieben.

Allen genannten Lösungen haftet der Nachteil an, dass die Kacheln selbst und auch die Ausfüllmasse eine niedrige Wärmeleitfähigkeit haben und durch die allseitige Abdeckung der Lötösen einen thermischen Widerstand für den Abfluss der dort entstehenden Stromwärme bilden. Mit zunehmender Ausnutzung und Einheitsleistung elektrischer Grossmaschinen mit indirekter Statorwicklungskühlung wachsen auch die Stromdichten in den Wicklungstäben, somit auch die Stromwärmeverluste in den Stabenden und Lötösen. Ebenfalls zunehmende Betriebs- und Prüfspannungen der Statorwicklung erfordern entsprechend dickere elektrische Lötösenisolierungen. Beides zusammen kann zu höheren örtlichen Übertemperaturen führen, was die Wicklungsausnutzung insgesamt einschränkt und die Weiterentwicklung der elektrischen Maschinen genannter Art behindert.

Eine verbesserte Wärmeableitung durch die Lötösenisolierung hindurch wird beispielsweise in der EP 0 713 281 mittels eng anliegender, schrumpfbarer und tränkbarer Isoliermaterialien vorgeschlagen. Die allseitige Abdeckung der Lötösen durch solche Isolierungen schränkt dennoch den Abfluss der Stromwärme an das Umgebungskühlgas ein.

### DARSTELLUNG DER ERFINDUNG

Aufgabe der Erfindung ist es, eine Lötösenisolierung zu schaffen, die gleichzeitig eine ausreichende elektrische Isolation der Stabenden elektrischer Maschinen gewährleistet und eine wesentlich gegenüber dem Stand der Technik verbesserte Wärmeabgabe der Lötösen ermöglicht.

Erfindungsgemäss wird die Aufgabe durch die Merkmale des ersten Anspruchs gelöst.

Die Vorteile der Erfindung sind unter anderem darin zu sehen, dass durch eine einseitige Isolierung der Lötösen zum einen eine hochwertige elektrische Isolation gegenüber benachbarten Lötösen und gegenüber geerdeten Gehäuseteilen bereitgestellt wird, und zum anderen ein unmittelbarer Wärmeübergang von den blanken Lötösenoberflächen zum vorbeiströmenden Kühlgas ermöglicht wird. Derartige Halbkachel-Isolierungen an Lötösen sind somit elektrisch unproblematisch, und sie haben den entscheidenden Vorteil gegenüber dem bekannten Stand der Technik, dass sie eine stark verbesserte Kühlung der Lötösen gewährleisten. Das direkte Vorbeiströmen von Kühlgas an den blanken Oberflächen der Lötösen bewirkt in typischen Fällen eine Absenkung der Lötösen-Erwärmung von beispielsweise 25K (Kelvin). Dabei macht eine um 25K abgesenkte Erwärmung eine Reduktion um mehr als ein Viertel der Gesamterwärmung aus. Eine derartig reduzierte Erwärmung erlaubt bei optimierter Kühlung eine höhere elektrische Ausnutzung und damit eine insgesamt wirtschaftlichere Auslegung der elektrischen Maschine.

Bei einer besonders bevorzugten Ausführungsform der Erfindung ist vorgesehen, dass die Halbkachel die Lötöse axial in beiden Richtungen überragt, also über die Stirnseite der Lötöse hinausragt und zu dem Statorblechkörper hin die Lötöse überragt. Dabei überragt die Halbkachel die Lötöse bis über eine Hauptisolierung der mit der Lötöse verbundenen Wicklungsstäbe und auf der anderen Seite der Halbkachel über die Stirnseite der Lötöse hinaus. Besonders vorteilhaft ist, wenn die axialen Überhänge der Halbkachel über die Lötöse mindestens so gross sind wie die halbe Breite der Lötöse in Umfangsrichtung der elektrischen Maschine.

Des weiteren ist von Vorteil, wenn die Halbkachel die Lötöse in Umfangsrichtung überdeckt, wobei eine derartige Abdeckung der Halbkachel in Umfangsrichtung der elektrischen Maschine über die Lötöse mindestens so gross ist wie die halbe Breite der Lötöse in Umfangsrichtung.

Eine besonders bevorzugte Ausführung der Erfindung sieht vor, dass die Stirnseite der Lötöse frei ist von einer Isolierung.

Weitere vorteilhafte Ausgestaltungen der Erfindung ergeben sich aus den Unteransprüchen.

### KURZE BESCHREIBUNG DER ZEICHNUNG

Die Erfindung wird nachstehend anhand eines Ausführungsbeispiels näher erläutert, und zwar zeigt:
- Fig.1: einen Längsschnitt durch den Stator-Stirnraum einer elektrischen Maschine mit einer Hochspannungs-Stabwicklung;
- Fig.2: eine Draufsicht auf den Stator-Wickelkopfin ebener Darstellung;
- Fig.3: die Enden zweier Wicklungsstäbe mit der sie verbindenden Lötöse;
- Fig.4: eine Grundausführung einer erfindungsgemässen Halbkachel auf einer Lötöse;
- Fig.5: Beispiele für die Anordnung der Halbkacheln.

Es sind nur die für das Verständnis der Erfindung wesentlichen Elemente gezeigt.

### WEG ZUR AUSFÜHRUNG DER ERFINDUNG

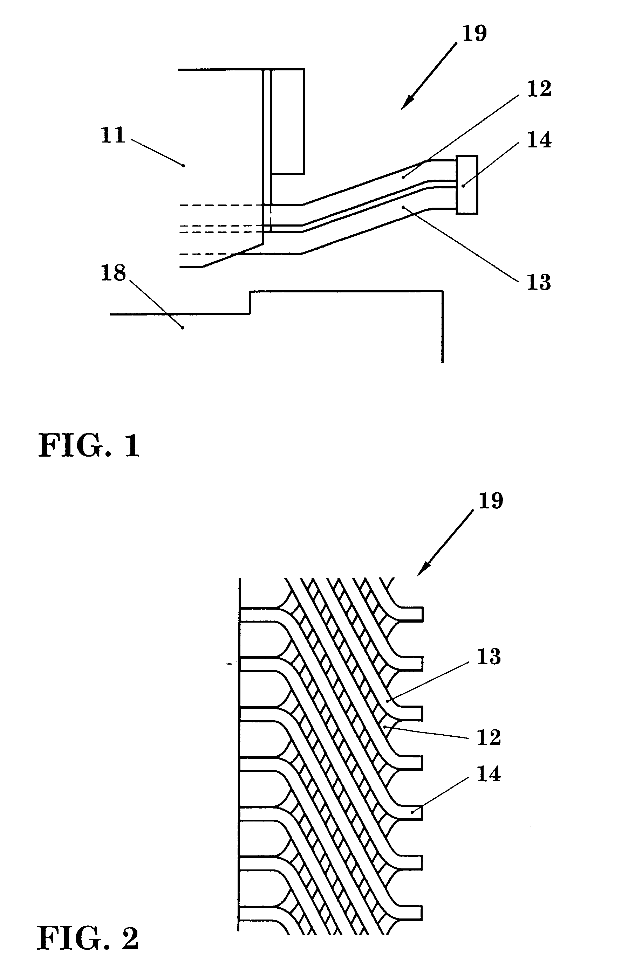

Die Fig.1 zeigt einen Längsschnitt durch den Stator-Stirnraum einer elektrischen Maschine mit-einer Hochspannungs-Stabwicklung. Die Hochspannungs-Stabwicklung wird durch in einen Statorblechkörper 11 eingelegte Unterstäbe 12 und Oberstäbe 13 gebildet. Mittels Lötösen 14 sind die Unterstäbe 12 und Oberstäbe 13 im Wickelkopfraum 19 beiderseits der Maschine elektrisch und mechanisch miteinander verbunden, wie auch Fig.2 anhand einer abgewickelten Draufsicht auf den Wickelkopfraum 19 zeigt.

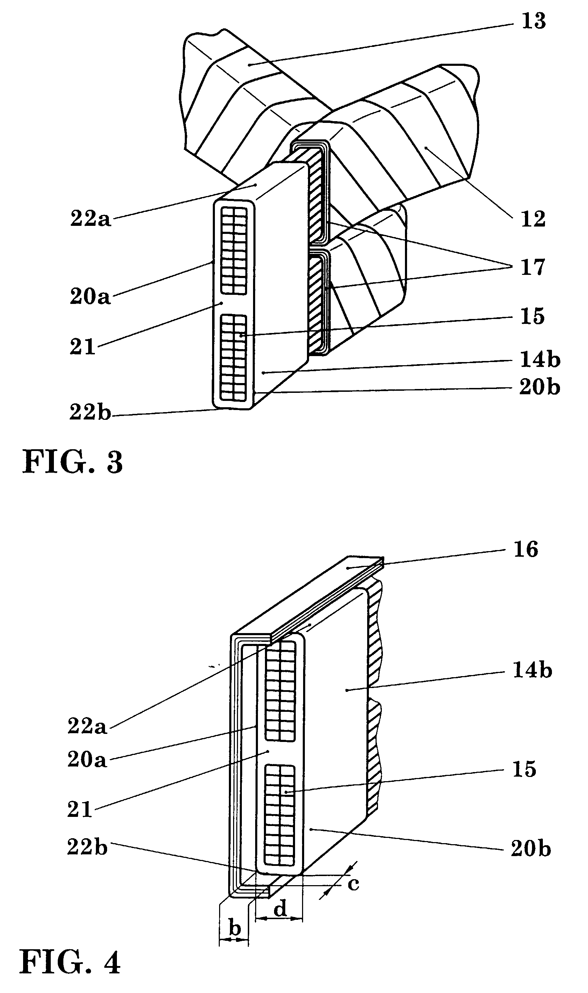

Fig. 3 zeigt, wie ein Unterstab 12 und ein Oberstab 13, beide bestehend aus einer Vielzahl von Teilleitern 15, an ihren Stabenden mittels einer Lötöse 14b verbunden sind. Die Wicklungsstäbe 12, 13 sind jeweils bis kurz vor der Lötöse 14b mit einer Hauptisolierung 17 versehen. Die Lötöse 14b weist zwei grosse und zwei kleine Seitenflächen auf, von denen die beiden grossen eine radialaxiale Ausrichtung aufweisen und mit 20a und 20b bezeichnet sind. Die beiden kleineren Seitenflächen 22a und 22b weisen eine tangential-axiale Ausrichtung im Wickelkopfgebilde der elektrischen Maschine auf.

Erfindungsgemäss ist die Lötöse 14b, wie Fig.4 verdeutlicht, an der linken Seitenwand 20a der Lötöse 14b mit einer elektrisch isolierenden Halbkachel 16 versehen, die ebenfalls die kleinen Seitenflächen 22a, 22b der Lötöse 14b teilweise überdeckt. Die Abdeckung b der kleinen Seitenflächen 22a, 22b ist dabei mindestens so gross wie die halbe Breite d der Lötöse 14b in Umfangsrichtung der elektrischen Maschine. Hierbei ist nicht zwingend, dass beide kleinen Seitenflächen 22a, 22b gleichermassen überdeckt werden.

Erfindungswesentlich ist, dass die zweite grosse Seitenfläche, in Fig.4 ist es beispielhaft die rechte Seitenfläche 20b, völlig frei bleibt von einer elektrischen Isolierung. Vorteilhaft im Sinne der Erfindung ist ebenfalls eine blanke, das heisst, nicht abgedeckte Stirnseite 21. Für ein an den freien Oberflächen der Lötöse 14b vorbeiströmendes Kühlgas, beispielsweise Luft oder Wasserstoff, ist es somit möglich, eine unmittelbare Kühlung der Lötöse zu bewirken. Auf diese Weise kann die Erwärmung einer im Betrieb befindlichen Lötöse 14b um mehr als ein Viertel der Erwärmung unter konventionellen Bedingungen gesenkt werden. In Zahlen-ausgedrückt bedeutet das eine Reduktion der Erwärmung um beispielsweise 25K (Kelvin).

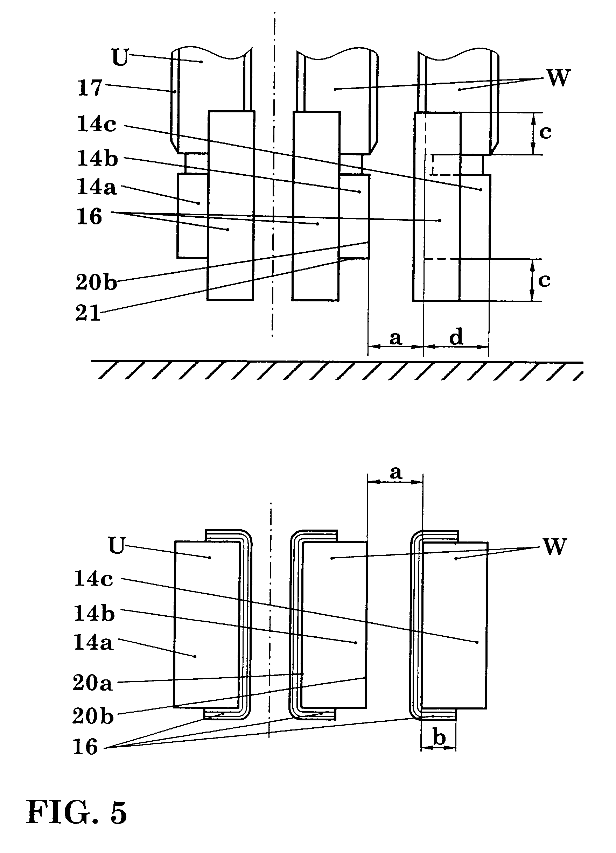

Wie Fig.5 erhellt, ist es von Bedeutung, dass die in einem Abstand a nebeneinander angeordneten Lötösen 14a,b,c benachbarter Wicklungsstäbe, beispielsweise unterschiedlicher elektrischer Phase U und W, ausreichend elektrisch voneinander isoliert sind. Zu diesem Zweck überragt jede Halbkachel 16 die zugehörige Lötöse 14a,b,c in axialer Richtung, wobei der Überhang c zum einen über die Hauptisolierung 17 der Wicklungsstäbe und zum anderen über die Stirnseite 21 der Lötöse 14 hinaus mindestens so gross ist wie die halbe Breite d der Lötöse in Umfangsrichtung der elektrischen Maschine. Auch hier sei erwähnt, dass der axiale Überhang c über die Hauptisolierung 17 und über die Stirnseite 21 auch unterschiedlich gross sein kann.

An Phasentrennungen, wie sie beispielhaft zwischen unterschiedlichen Phasen U und W der Wicklungsstäbe auftreten, in Fig.5 strichliert dargestellt, werden die Lötösen 14a,b derart mit isolierenden Halbkacheln 16 versehen, dass diese einander zugewandt sind. Innerhalb einer Phase W sind die Halbkacheln 16 an einer Lötöse 14c direkt neben einer blanken, grossen Seitenfläche 20b einer benachbarten Lötöse 14b angeordnet.

Eine derartige Anordnung von Halbkacheln 16 an Lötösen 14a,b,c innerhalb einer Phase und an Phasentrennungen gewährleistet eine gegenüber herkömmlichen Lötösen-Isolierungen absolut gleichwertige elektrische Isolation. Hinzukommt die hervorragende Kühlmöglichkeit der elektrisch und thermisch hochausgenützten Lötösen 14a,b,c, womit eine erhebliche Absenkung der Erwärmung, wie bereits oben erläutert wurde, erzielt wird. Die Verwendung von Halbkacheln 16 erlaubt einen erweiterten Betriebsbereich der mit ihr ausgestatteten elektrischen Maschine und eröffnet somit eine wirtschaftlich optimiertere Auslegung.

Denkbar im Sinn der Erfindung ist auch, die an sich blanke Seitenfläche und die Stirnfläche der Lötösen 14 mit einem Lack zu versehen, der vor Verschmutzung respektive Kriechwegausbildung schützt. Des weiteren ist auch denkbar, nur Lötösen höherer Potentialdifferenz mit den erfindungsgemässen Halbkacheln zu versehen, und alle weiteren Lötösen frei zu lassen, bei denen die Potentialdifferenz klein genug ist.

### BEZUGSZEICHENLISTE

- 11: Statorblechkörper
- 12: Unterstab
- 13: Oberstab
- 14a,b,c: Lötöse
- 15: Teilleiter
- 16: Halbkachel
- 17: Hauptisolierung
- 18: Rotor
- 19: Wickelkopfraum
- 20a,b: grosse Lötösenseitenfläche
- 21: Stirnseite der Lötöse
- 22a,b: kleine Lötösenseitenfläche
- a: Abstand zwischen Stabenden ohne Isolierung
- b: Abdeckung der Lötösen in Umfangsrichtung
- c: Überhang axial
- d: Breite einer Lötöse

## Patentansprüche

1. Lötösenisolierung für eine aus Wicklungsstäben (12, 13) aufgebaute Statorwicklung einer elektrischen Maschine, deren Stabenden in einem Wickelkopf (19) weiterverbindende Lötösen (14a, b, c) aufweisen, die voneinander und gegenüber geerdeten Gehäuseteilen isoliert sind,
dadurch gekennzeichnet,
dass im wesentlichen eine erste Lötösenseitenfläche (20a) einer ersten Lötöse (14b) mit einer Halbkachel (16) bedeckt ist, wobei die erste Lötösenseitenfläche (20a) einer zweiten benachbarten Lötöse (14a) zugewandt ist, und
dass eine zweite Lötösenseitenfläche (20b) der ersten Lötöse (14b) frei bleibt, wobei diese zweite Lötösenseitenfläche (20b) einer dritten Lötöse (14c) benachbart ist.

2. Lötösenisolierung nach Ansprüche 1
dadurch gekennzeichnet,
dass an Positionen mit grosser Potentialdifferenz, beispielsweise bei einer Phasentrennung, zwischen einer ersten (14b) und einer zweiten (14a) Lötöse die isolierenden Halbkacheln (16) an den genannten Lötösen (14a, b) einander zugewandt sind.

3. Lötösenisolierung nach Anspruch 1 oder 2,
dadurch gekennzeichnet,
dass die Halbkachel (16) die erste Lötöse (14b) axial in beiden Richtungen überragt, also über eine Stirnseite (21) der Lötöse (14b) hinausragt und zu einem Statorblechkörper (11) hin die Lötöse (14b) überragt.

4. Lötösenisolierung nach Anspruch 3
dadurch gekennzeichnet,
dass die Halbkachel (16) die Lötöse (14b) bis über eine Hauptisolierung (17) der Wicklungsstäbe (12, 13) überragt, wobei der Überhang (c) über die Hauptisolierung mindestens so gross ist wie die halbe Breite (d) der Lötöse (14b) in Umfangsrichtung der elektrischen Maschine.

5. Lötösenisolierung nach Anspruch 3
dadurch gekennzeichnet,
dass der axiale Überhang (c) der Halbkachel (16) über die Stirnseite (21) der Lötöse (14b) hinaus mindestens so gross ist wie die halbe Breite (d) der Lötöse (14b) in Umfangsrichtung der elektrischen Maschine.

6. Lötösenisolierung nach einem der Ansprüche 1 - 5
dadurch gekennzeichnet,
dass eine Abdeckung (b) der Halbkachel (16) in Umfangsrichtung der elektrischen Maschine über die Lötöse (14b) mindestens so gross ist wie die halbe Breite (d) der Lötöse (14b) in Umfangsrichtung.

7. Lötösenisolierung nach einem der Ansprüche 1 - 6
dadurch gekennzeichnet,
dass die Stirnseite (21) der Lötöse (14a,b,c) frei ist von einer Isolierung.

8. Lötösenisolierung nach einem der Ansprüche 1 - 7
dadurch gekennzeichnet,
dass die freien Aussenflächen der Lötösen (14) zwecks Schutz vor Verschmutzung mit einem Lacküberzug versehen sind.
